(19) Europäisches Patentamt
European Patent Office
Office européen des brevets

(11) **EP 3 137 355 B1**

(12) **FASCICULE DE BREVET EUROPEEN**

(45) Date de publication et mention de la délivrance du brevet:
**01.09.2021 Bulletin 2021/35**

(21) Numéro de dépôt: **15725719.7**

(22) Date de dépôt: **09.04.2015**

(51) Int Cl.:
***B60W 30/095*** *(2012.01)*    ***G06K 9/62*** *(2006.01)*

(86) Numéro de dépôt international:
**PCT/FR2015/050939**

(87) Numéro de publication internationale:
**WO 2015/166156 (05.11.2015 Gazette 2015/44)**

(54) **DISPOSITIF DE SIGNALISATION D'OBJETS A UN MODULE DE NAVIGATION DE VEHICULE EQUIPE DE CE DISPOSITIF**

VORRICHTUNG ZUR OBJEKT BESTIMMUNG AN EINEM NAVIGATIONSMODUL VON EINEM FAHRZEUG AUSGERÜSTET MIT DIESER VORRICHTUNG

DEVICE FOR DESIGNATING OBJECTS TO A NAVIGATION MODULE OF A VEHICLE EQUIPPED WITH SAID DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2014 FR 1453910**

(43) Date de publication de la demande:
**08.03.2017 Bulletin 2017/10**

(73) Titulaire: **Renault S.A.S.**
**92100 Boulogne-Billancourt (FR)**

(72) Inventeurs:
• **IBÁÑEZ GUZMÁN, Javier**
  **F-78125 Raizeaux (FR)**
• **FREMONT, Vincent**
  **F-60150 Le Plessis Brion (FR)**
• **BONNET, Stéphane**
  **F-60280 Margny-les-compiegne (FR)**
• **DE MIRANDA NETO, Arthur**
  **F-60150 Longueil-Annel (FR)**

(56) Documents cités:
**EP-A1- 2 223 838       WO-A1-2004/031877**
**DE-A1-102009 006 113   US-A1- 2012 035 846**
**US-B2- 7 725 228**

• **FENG LIU ET AL: "IMMPDA vehicle tracking system using asynchronous sensor fusion of radar and vision", 2007 IEEE INTELLIGENT VEHICLES SYMPOSIUM, 1 janvier 2008 (2008-01-01), pages 168-173, XP055162672, ISSN: 1931-0587, DOI: 10.1109/IVS.2008.4621161 ISBN: 978-1-42-441068-2**
• **CROWLEY J L ET AL: "Principles and techniques for sensor data fusion", SIGNAL PROCESSING, ELSEVIER SCIENCE PUBLISHERS B.V. AMSTERDAM, NL, vol. 32, no. 1-2, 1 mai 1993 (1993-05-01), pages 5-27, XP026650218, ISSN: 0165-1684, DOI: 10.1016/0165-1684(93)90034-8 [extrait le 1993-05-01]**
• **None**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un dispositif de signalisation d'un ou plusieurs objets à un module de navigation de véhicule et un véhicule équipé d'un tel dispositif, notamment un véhicule automobile autonome.

La signalisation d'objets, notamment d'objets constituant des obstacles effectifs ou potentiels, a pour but d'offrir à un système mobile autonome, une perception de l'environnement, naturel ou contraint, dans lequel il évolue. Cette perception est obtenue au moyen d'un traitement de données acquises par des capteurs de type vidéo, lidar et/ou radar, voire à ultrasons, notamment en construisant une carte numérique locale et dynamique de cet environnement à partir de distances aux différents objets de la scène et de leurs vitesses. Cette carte sert de connaissance de base pour planifier et mettre en œuvre des manœuvres automatiques appropriées. Pour de tels véhicules autonomes, le processus de perception constitue la première tâche à réaliser avant la décision et l'action. Elle fournit une représentation spécifique de l'environnement et de son propre état, en extrayant et en intégrant au cours du temps des propriétés clé issues des données des capteurs, pour être compréhensible par un ordinateur.

La tâche de perception réalise deux fonctions : elle permet de détecter les différents objets en déplacement ou pas dans son environnement proche, et d'estimer leurs états, tels que leur position vis-à-vis du véhicule, leur vitesse, leur direction, leur taille, etc. La perception sert donc d'entrée au module de génération de trajectoire et peut être utilisée pour prédire d'éventuelles collisions et réaliser un évitement d'obstacle. La perception est considérée comme la source d'information la plus importante pour les véhicules autonomes.

Depuis quelques années on trouve sur le marché des capteurs dits « intelligents » qui sont de plus en plus utilisés dans le freinage assisté (ABS). Ces capteurs intelligents, non seulement détectent les objets, mais peuvent aussi les caractériser. Malgré cela, ils ne sont pas parfaits, d'où la nécessité d'améliorer les performances des systèmes de perception en combinant l'utilisation de capteurs complémentaires. L'utilisation de plusieurs capteurs permet aussi d'introduire le principe de redondance afin d'atteindre des systèmes de perception plus robustes ; indispensables pour la navigation autonome. Dans ces approches de fusion de données multi-capteurs, l'objectif est de combiner les informations de différents capteurs pour augmenter la fiabilité, la précision et la complétude d'une situation perçue. La sortie d'un tel système est une liste d'objets avec leurs attributs et une mesure d'intégrité. Dans une tâche de perception, l'intégrité peut être définie comme la capacité à fournir une information de confiance tout en considérant le bruit (erreurs aléatoires), les mesures incertaines et aberrantes.

La plupart des approches de perception se veulent génériques et souffrent donc d'un problème d'optimalité quant à l'application visée et ne permettent pas de fournir des informations de haut niveau pour l'aide à la planification pour la navigation autonome. A travers cette nouvelle solution technique, nous proposons d'améliorer l'intégrité de la perception multi-capteurs et d'aider à la prise de décision pour la navigation autonome à travers l'extraction et la prise en compte d'informations contextuelles et sémantiques issues de la scène observée.

Le document EP0928428B1 divulgue par exemple un procédé d'évaluation de la qualité de mesure d'un capteur de mesure de distance sur un système mobile autonome. On y évalue la qualité de mesure par rapport à une cellule en fonction du nombre d'autres capteurs de mesure qui parviennent au même état d'occupation de la cellule que le capteur évalué, qualité mesurée d'autant plus grande que le nombre de capteurs confirmant l'état d'occupation est élevé.

Cependant le procédé divulgué présente de nombreux inconvénients à son utilisation dans un dispositif de signalisation d'un ou plusieurs objets à un module de navigation de véhicule. Parmi ces inconvénients on peut noter celui de la nécessité de cellules qui est lié aux incertitudes de mesure sur des objets chevauchant la grille de séparation des cellules, notamment pour les objets mobile se déplaçant d'une cellule à l'autre entre deux mesures de capteurs. L'un des problèmes posés ici est alors celui de pouvoir s'affranchir d'une grille de cloisonnement de l'environnement en cellules. Un autre problème posé est celui de disposer de suffisamment de données pour signaler au mieux chaque objet à un module de navigation.

Un procédé permettant de déterminer l'environnement d'un véhicule à l'aide d'au moins un capteur externe est également connu du document WO 2004/031877 A1.

De manière plus générale, un autre problème subsiste encore dans l'état antérieur de la technique qui est celui d'améliorer la performance de détection et d'exploitation de la détection au-delà d'une simple évaluation de qualité.

Pour remédier aux problèmes de l'état antérieur de la technique, l'invention a pour objet un dispositif de signalisation d'au moins un objet à un module de navigation de véhicule comprenant un premier capteur agencé pour produire des données de premier capteur comportant une première position et une première vitesse capturées de l'objet par rapport au véhicule, et comprenant également :

- au moins un deuxième capteur agencé pour produire des données de deuxième capteur comportant une deuxième position et une deuxième vitesse capturées de l'objet par rapport au véhicule ;
- un module de synchronisation agencé pour produire des données synchronisées comportant une première position synchronisée à partir de la première position et de la première vitesse capturées et au moins une deuxième position synchronisée à partir de la deuxième position et de la deuxième vitesse capturées ;

- un module de fusion agencé pour produire des données fusionnées comportant une position fusionnée à partir de la première position synchronisée et de la deuxième position synchronisée de façon à signaler ledit au moins un objet au module de navigation en lui communiquant lesdites données fusionnées.
- -un module d'évaluation de risque agencé pour compléter les données fusionnées par un indicateur de risque associé à chaque objet signalé et généré à partir des données fusionnées.
- -un ensemble de blocs de calcul de score à partir d'une ou plusieurs données fusionnées et un bloc de combinaison de scores calculés par tout ou partie de l'ensemble de blocs de calcul de score de façon à générer l'indicateur de risque de chaque objet par combinaison de scores.

Ledit ensemble comprend un bloc de calcul de score de distance séparant l'objet et le véhicule, un bloc de calcul de score d'angle séparant un axe de visée de l'objet et un axe longitudinal du véhicule, un bloc de calcul de score de vitesse d'évolution de l'objet par rapport au véhicule et un bloc de calcul de score de type d'objet pour attribuer un score de vulnérabilité en fonction du type d'objet.

Ledit bloc de combinaison de scores applique aux scores élaborés par le bloc de calcul de score de distance, le bloc de calcul de score d'angle, le bloc de calcul de score de vitesse et le bloc de calcul de score de type d'objet, une règle de combinaison qui dépend de l'utilisation prévue.

Plus particulièrement aussi, ledit ensemble comprend au moins un bloc de calcul de score à partir en outre de données cartographiques.

Plus particulièrement encore, ledit bloc de combinaison est agencé pour combiner les scores par sommation pondérée de tout ou partie des scores calculés.

Utilement, le module de fusion est agencé pour fusionner au moins une position supplémentaire synchronisée à ladite position fusionnée à partir de la première position synchronisée et de la deuxième position synchronisée.

Avantageusement, les données synchronisées accédées par le module de fusion, comportent en outre une variance de position associée à chaque position synchronisée de façon à effectuer une sommation des positions synchronisées, pondérée par les variances associées pour fusionner les positions synchronisées.

Les données synchronisées, comportent en outre avantageusement une variance de position associée à chaque position synchronisée, de sorte que le module de fusion est agencé pour produire des données fusionnées comportant une position fusionnée à partir de la première position synchronisée et de la deuxième position synchronisée de façon à signaler un même objet au module de navigation en lui communiquant lesdites données fusionnées lorsqu'une distance de Mahalanobis entre lesdites positions synchronisées est inférieure à un seuil prédéterminé et pour ne pas produire de données fusionnées comportant une position fusionnée à partir de la première position synchronisée et de la deuxième position synchronisée de façon à signaler deux objets différents au module de navigation lorsque ladite distance de Mahalanobis est supérieure au seuil prédéterminé.

L'invention a aussi pour objet un véhicule automobile caractérisé en ce qu'il comporte un dispositif selon l'invention.

D'autres caractéristiques et avantages de l'invention apparaitront au cours de la lecture de la description détaillée qui va suivre pour la compréhension de laquelle on se reportera aux dessins annexés parmi lesquels :

- la figure 1 est un schéma qui représente un véhicule équipé du dispositif de signalisation conforme à l'invention ;
- les figures 2 et 3 sont des vues schématiques d'environnement du véhicule pour expliquer l'utilité du dispositif dont il est équipé ;
- la figure 4 est un schéma de dispositif conforme à l'invention ;
- la figure 5 est un schéma de module de synchronisation du dispositif de la figure 4 ;
- la figure 6 est un schéma de module de fusion du dispositif de la figure 4;
- les figures 7 à 10 sont des schémas de blocs de calcul de score de facteurs de risque ;
- la figure 11 est un schéma de bloc de combinaison de scores pour générer un indicateur de risque
- la figure 12 montre des étapes de procédé conforme à l'invention.

Dans la suite de la description, des éléments présentant une structure identique ou des fonctions analogues seront désignés par un même numéro de référence.

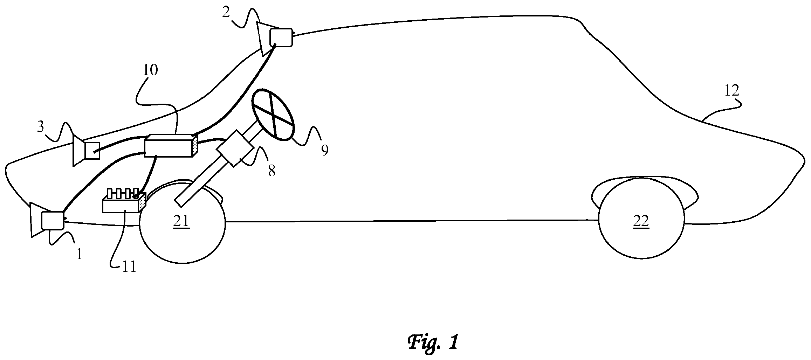

La figure **1** montre un véhicule 12 équipé de manière conventionnelle de roues avant 21, de roues arrière 22 et d'un volant 9 de direction pour braquer les roues avant 21 par l'intermédiaire d'une colonne de direction 8. Un groupe motopropulseur 11, électrique, thermique ou hybride, est piloté en accélération et en ralentissement par un système électronique embarqué 10, programmé aussi par ailleurs pour contrôler sur la colonne de direction 8, un angle de braquage $\alpha$ commandé à partir du volant 9 en mode manuel ou à partir d'un module de navigation 60 en mode autonome. Le module 60 de navigation comporte de manière connue en soi un contrôleur de trajectoire comme par exemple mais non nécessairement celui décrit dans le document WO2014/009631. Le système électronique embarqué 10 est connecté par ailleurs directement ou indirectement à des moyens d'action sur le véhicule 12, notamment des moyens de freinage mécanique, connus par ailleurs, sur les roues 21, 22 en cas de risque de percussion par le véhicule détecté élevé. Le système électronique embarqué 10 est connecté à des capteurs 1, 2, 3, 4, sans limiter la quantité de capteurs à quatre, installés de préférence sur le véhicule pour en traiter des informations reçues sur un environnement du véhicule au moyen de modules de traitement numérique comme expliqué à présent.

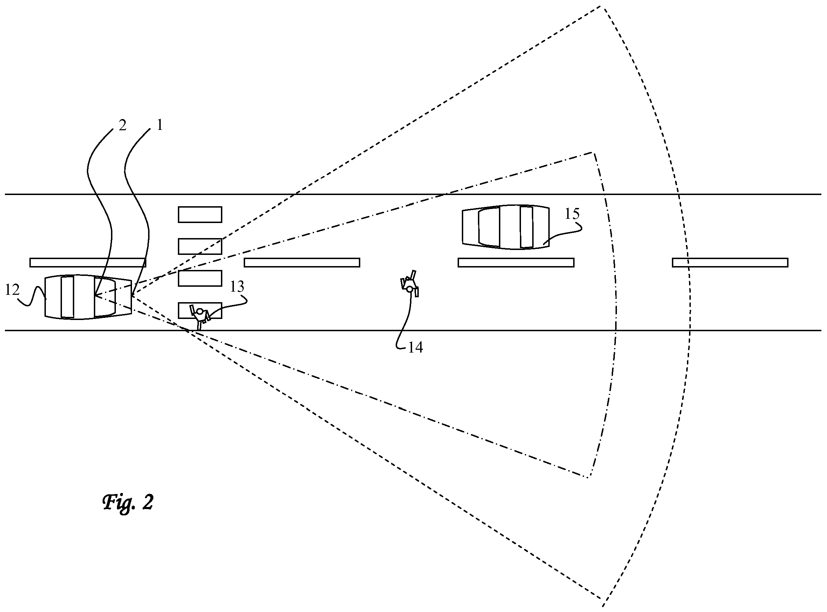

La figure **2** montre un environnement possible du véhicule 12, occupé par des objets 13, 14, 15 qui peuvent constituer des obstacles fixes ou mobiles dont le module 60 de navigation doit tenir compte pour contrôler un déplacement du véhicule 12 dans cet environnement sans risquer de percuter l'un des objets. Le capteur 1 est par exemple mais non nécessairement un capteur de perception radar dont le champ de perception est représenté en traits mixtes vers l'avant du véhicule. Le capteur 2 est par exemple mais non nécessairement une caméra vidéo dont le champ de perception est représenté en traits pointillés vers l'avant du véhicule. L'utilisation de capteurs de technologies différentes est intéressante pour de nombreuses raisons. Par exemple la caméra vidéo peut permettre de distinguer plus précisément le type de chaque objet, type piéton pour chacun des objets 13 et 14, type véhicule de face pour l'objet 15, type centre de voie matérialisé par les bandes discontinues de marquage au sol, sous réserve que les conditions d'éclairage et de visibilité le permettent. Si la distinction de type est moindre pour le capteur de perception radar, ce dernier permet une détection moins soumise aux conditions d'éclairage et de visibilité. On peut utiliser d'autres types de capteurs comme par exemple, à titre purement illustratif et non exhaustif le type caméra vidéo stéréo, lidar, à ultrason ou infra-rouge. Au moins deux capteurs parmi les capteurs utilisés sont des capteurs intelligents.

Un capteur est dit intelligent en ce qu'il est agencé pour effectuer un traitement du signal qu'il capture, de manière à détecter les objets 13, 14, 15 et pour chaque objet détecté, à produire des données de capteur qui comportent une position et une vitesse de l'objet telle qu'elles sont capturées dans un repère relatif au capteur. Avantageusement, on peut aussi prévoir un paramétrage de capteur de façon à ramener les coordonnées de position et de vitesse obtenues dans le repère relatif au capteur 1, 2, en coordonnées x,y de position et Vx, Vy de vitesse retranscrites dans un repère relatif au véhicule 12, ceci par exemple en tenant compte du lieu d'installation du capteur sur le véhicule. Les données produites par chaque capteur intelligent d'indice i, sont de préférence structurées en une liste Lci d'objets détectés $O_1$, $O_k$, $O_N$, comportant en entête un nombre N des objets détectés par le capteur, un code horodateur $t_{sp}$ et un indicateur de latence $t_l$.

Pour produire le code horodateur $t_{sp}$, en entête de la liste Lci, le capteur peut accéder à une horloge universelle, par exemple une horloge GNSS (Global Navigation Satellite System) couramment disponible dans le module 60 de navigation. Le capteur 1, 2 inscrit alors dans le code $t_{sp}$ l'instant auquel il produit la liste Lci (Lc1 pour le capteur 1, Lc2 pour le capteur 2). Le capteur 1, 2 inscrit simultanément dans l'indicateur de latence $t_l$, la durée qui sépare l'instant de capture temps réel du signal, de l'instant de production de la liste Lci, en d'autres termes le délai consommé pour traiter le signal de façon à produire la liste Lci. L'indicateur de latence $t_l$ peut aussi tenir compte de la célérité du signal perçu lui-même. On sait par exemple que la célérité du son est très inférieure à celle de la lumière.

Comme expliqué dans la suite de la description, l'invention peut aussi être mise en œuvre avec des capteurs qui ne produisent pas le code horodateur $t_{sp}$, en entête de la liste Lci.

A chaque objet répertorié $O_1$, $O_k$, $O_N$ dans la liste Lci, est associée une sous-liste d'attributs comprenant un identificateur d'objet Id, une position de l'objet repérée par ses coordonnées x,y de position, une vitesse de déplacement de l'objet repérée par ses coordonnées Vx, Vy de vitesse, une incertitude de position évaluée par des variances statistiques $\sigma^2 x$, $\sigma^2 y$, un type d'objet (piéton pour l'objet 13 ou 14, véhicule pour l'objet 15) et une dimension de l'objet, telles que ces données sont capturées par le capteur d'indice i qui produit la liste Lci, i variant de 1 à Q où Q représente le nombre de capteurs.

Ainsi, à chacun des objets 13, 14, 15 qui se trouvent devant le véhicule à la fois dans le champ de perception du capteur 1 et dans celui du capteur 2, correspondent deux sous-listes d'attributs, l'une associée à l'objet tel qu'il est répertorié dans la liste Lc1 du capteur 1 et l'autre associée au même objet tel qu'il est répertorié dans la liste Lc2 du capteur 2.

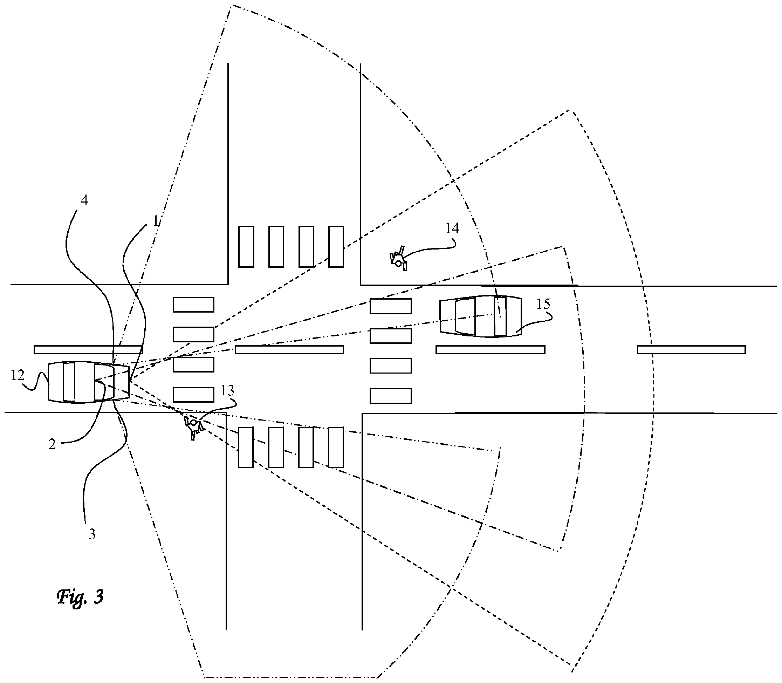

La figure **3** montre un autre environnement possible du véhicule 12, occupé par les objets 13, 14, 15. L'environnement représenté sur la figure 3 est relatif à celui d'un carrefour où des objets peuvent venir tant de la droite comme l'objet 13 de type piéton qui s'apprête à traverser la route que de la gauche comme l'objet 14 de type piéton qui s'apprête aussi à traverser la route.

Le capteur 3, par exemple mais non nécessairement un capteur de perception radar ou une caméra vidéo, couvre un champ de perception représenté en traits mixtes intermittents vers l'avant droit du véhicule. Le capteur 4, par exemple mais non nécessairement un capteur de même type que le capteur 3, couvre un champ de perception représenté en traits mixtes intermittents vers l'avant gauche du véhicule.

Ainsi, à l'objet 13 qui se trouve sur la droite à l'avant du véhicule à la fois dans le champ de perception du capteur 1 et dans celui du capteur 3, correspondent deux sous-listes d'attributs, l'une associée à l'objet 13 tel qu'il est répertorié dans la liste Lc1 du capteur 1 et l'autre associée à l'objet 13 tel qu'il est répertorié dans la liste Lc3 du capteur 3. De même, à l'objet 14 qui se trouve sur la gauche à l'avant du véhicule à la fois dans le champ de perception du capteur 1 et dans celui du capteur 4, correspondent deux sous-listes d'attributs, l'une associée à l'objet 14 tel qu'il est répertorié dans la liste Lc1 du capteur 1 et l'autre associée à l'objet 14 tel qu'il est répertorié dans la liste Lc4 du capteur 4. A l'objets 15 qui se trouve sur la gauche plus à l'avant du véhicule à la fois dans le champ de perception du capteur 1, dans celui du capteur 2 et dans celui du capteur 4, correspondent plus de deux sous-listes d'attributs, chacune associée à l'objet 15 tel qu'il est répertorié dans chacune des listes Lc1 du capteur 1, Lc2 du capteur 2 et Lc4 du capteur 4. De manière intéressante, il est possible de prévoir des capteurs en quantité suffisante pour obtenir des champs de perception qui couvrent la totalité du pourtour périphérique du véhicule 12 avec superpositions de secteurs de champs au moins deux à deux. On comprendra donc que le nombre Q de capteurs peut dépasser quatre et qu'il présente un intérêt dès qu'il est égal à deux.

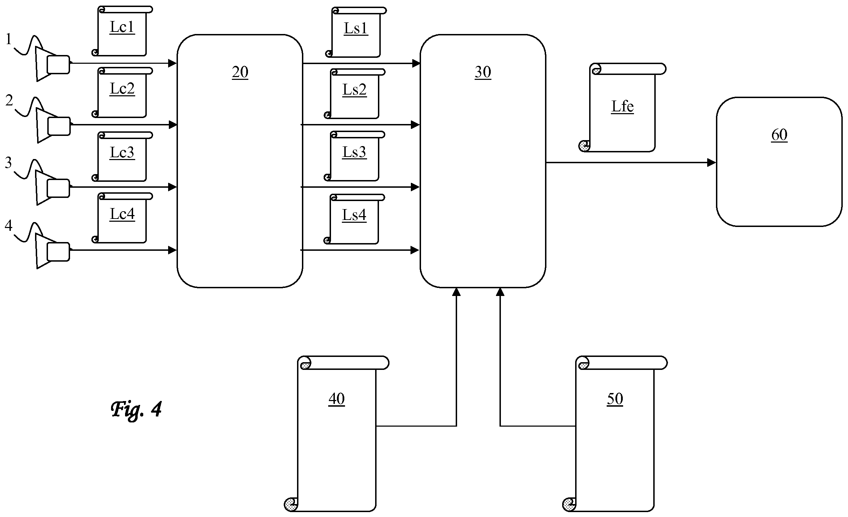

Les capteurs 1, 2, 3, 4 sont connectés au dispositif illustré par le schéma de la figure **4**, directement par liaison filaire ou par bus local parmi les type connus de bus CAN, LIN, Ethernet automobile ou autre, voire éventuellement via un module de communication externe pour pousser l'invention jusqu'à utiliser des capteurs fixes extérieurs au véhicule. De la sorte, les données de capteur structurées, dans le mode de réalisation ici présenté à titre purement illustratif par chacune des listes nommées Lc1, Lc2, Lc3, Lc4 produites chacune par l'un des capteurs repérés 1, 2, 3, 4, sont communiquées à un module 20 de synchronisation.

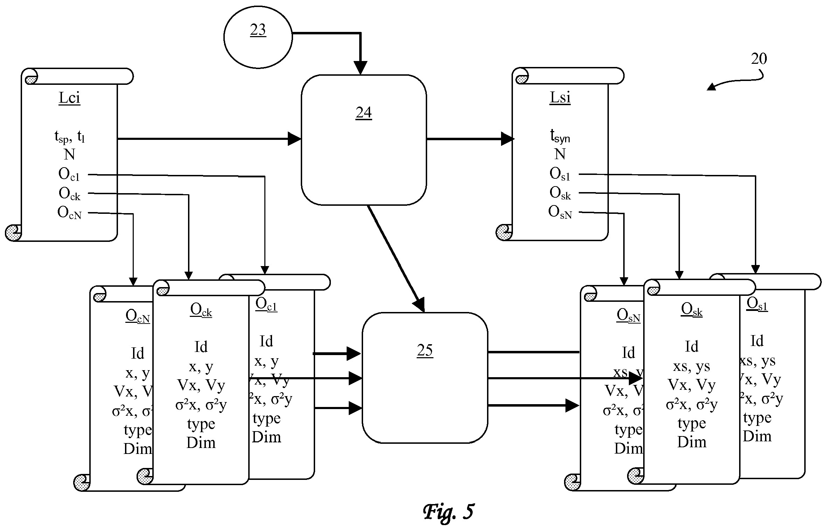

La figure **5** permet d'expliquer plus en détails la structure et le fonctionnement du module 20 de synchronisation.

Comme vu ci-dessus, chacun des Q capteurs est agencé pour produire des données, structurées ici par une liste Lci, i variant de 1 à Q. La liste Lci répertorie un nombre N d'objets $O_k$, k variant de 1 à N. On notera que le nombre N d'objets, peut être différent d'une liste Lci à l'autre. Ainsi, sur l'exemple de la figure 3, N vaut trois pour la liste Lc1 qui répertorie les objets 13, 14, 15, N vaut un pour la liste Lc2 qui répertorie le seul objet 15, N vaut un pour la liste Lc3 qui répertorie le seul objet 13, N vaut deux pour la liste Lc4 qui répertorie les objets 14 et 15.

Comme on le voit sur la figure 5, à chaque objet $O_k$ de la liste Lci, est associée une sous-liste d'attributs comportant une position et une vitesse de l'objet $O_k$ capturées par le capteur d'indice i, la position étant quantifiée par ses coordonnées x, y et la vitesse étant quantifiée par ses coordonnées Vx, Vy dans un repère relatif au véhicule 12. Les données produites par un capteur sont asynchrones aux données produites par un autre capteur car les instants de capture ne sont pas nécessairement synchrones d'un capteur à l'autre, la durée de traitement du signal notamment pour distinguer les objets et quantifier les attributs de chaque objet varient d'un capteur à l'autre, et dans une moindre mesure, la célérité elle-même du signal, différente d'une technologie de capteur à l'autre, peut provoquer un retard entre l'instant où le signal est issu de l'objet et l'instant où le signal est perçu par le capteur. Le fournisseur de chaque capteur est généralement à même de déterminer un indicateur de latence $t_l$ qui regroupe la durée de traitement, si besoin est le retard lié à la célérité du signal et éventuellement d'autres délais aisément évaluables en fonction de la connaissance de la technologie du capteur détenue par le fournisseur. La valeur de l'indicateur de latence $t_l$ est selon la technologie employée, fixée en mémoire du capteur par le fournisseur ou calculée en temps réel par le capteur lui-même de manière connue en soi dans le domaine technologique des processeurs dédiés, en fonction de sa charge de traitement.

A cause du mouvement possible de l'objet 13, 14, 15 et/ou du véhicule 12, la position de l'objet peut avoir varié entre l'instant indiqué par le code horodateur $t_{sp}$, qui est celui auquel les données du capteur sont produites, et l'instant antérieur $t_{sp}-t_l$ auquel l'objet avait effectivement la position capturée par le capteur.

Le module 20 de synchronisation comprend un sous-module 24 agencé pour calculer un délai Δt qui sépare un instant de synchronisation $t_{syn}$ et l'instant antérieur $t_{sp}-t_l$ auquel les objets détectés par le capteur d'indice i, avaient chacun effectivement la position capturée par le capteur indiquée dans la sous-liste d'attributs associée.

De façon à partager le même instant de synchronisation $t_{syn}$ avec l'ensemble des capteurs concernés, le sous-module 24 accède à une horloge de référence 23, par exemple de type GNSS (acronyme de l'expression anglaise Global Navigation Satellite System) qui donne un temps de référence universelle.

Parce qu'elle est propre à chaque capteur d'indice i, la valeur de l'indicateur de latence $t_l$ en entête de la liste Lci, provient du capteur lui-même.

Lorsque le capteur, installé sur le véhicule est directement connecté au module 20 par liaison filaire ou par réseau temps réel de type LIN ou de type CAN avec niveau de priorité élevée attribué aux trames émises par les capteurs, en d'autres termes lorsqu'on peut considérer que l'instant de production des données par le capteur est assimilable à l'instant de réception par le module 20, notamment par le sous-module 24, il est possible d'introduire dans la liste Lci le code horodateur $t_{sp}$ directement en entrée du sous-module 24 qui bénéficie de l'horloge de référence 23. Ceci permet d'utiliser des capteurs plus simples qui n'ont alors pas besoin d'émettre le code horodateur $t_{sp}$ et par conséquent pas besoin d'accéder à une horloge donnant un temps de référence universelle.

Lorsque le capteur, installé sur le véhicule n'est pas directement connecté au module 20 par liaison filaire, par exemple par réseau temps réel de type Ethernet 802.3 sur paire torsadée ou de type CAN avec niveau de priorité basse attribuée aux trames émises par les capteurs, ou par exemple encore par réseau de communication à distance pour des capteurs extérieurs au véhicule, en d'autres termes lorsqu'on peut considérer que l'instant de production des données par le capteur est considérablement antérieur à l'instant de réception par le module 20, notamment par le sous-module 24, il est préférable d'introduire dans la liste Lci le code horodateur $t_{sp}$ directement en sortie du capteur ou en sortie d'un système de proximité du capteur, agencés l'un ou l'autre pour émettre le code horodateur $t_{sp}$ en accédant à une horloge donnant le temps de référence universelle.

Pour remédier aux écarts de synchronisation liés à la diversité des types de capteurs, aux temps de transmission de signaux et des données ou encore à la charge de traitement du module 20 lui-même, le sous-module 24 est de préférence agencé pour vérifier un retard $t_{syn}-t_{sp}$ qui sépare l'instant de synchronisation $t_{syn}$ et l'instant antérieur $t_{sp}$ auquel les données ont été produites par le capteur d'indice i en vue de leur traitement par le sous-module 24.

Si le retard $t_{syn}-t_{sp}$ est supérieur ou égal à un seuil d'obsolescence de piste $t_{TF}$ et, les données en relation avec la date de production qui vaut $t_{sp}$, ne sont pas prises en compte et le sous-module 24 ne génère pas de liste Lsi pour répertorier des données synchronisées à partir des données reçues.

Si le retard $t_{syn}-t_{sp}$ est inférieur au seuil d'obsolescence de piste $t_{TF}$, le sous-module 24 utilise le délai $\Delta t$ pour produire des données synchronisées structurées dans l'exemple illustré par la figure 5, au moyen de listes Lsi d'objets synchronisés. Chaque liste Lsi reste associée au capteur d'indice i, i valant par exemple 1, 2, 3, 4 pour respectivement le capteur 1, 2, 3, 4. Alors que les valeurs de $t_{sp}$ et $t_i$ peuvent être différentes pour chaque liste Lci, toutes les listes Lsi contiennent une même valeur de $t_{syn}$ indiquant l'instant de synchronisation commun à toutes les listes Lsi. Chaque liste Lsi peut contenir un nombre N d'objets synchronisés, égal au nombre N contenu dans la liste Lci correspondante.

A chaque objet $O_k$ répertorié dans la liste Lsi considérée, est associée une sous-liste d'attributs comportant une position et une vitesse de l'objet $O_k$ détecté par le capteur d'indice i. La position est quantifiée ici par ses coordonnées xs, ys estimées à l'instant $t_{syn}$ commun à tous les objets et pour un même objet, commun à tous les capteurs ayant détecté cet objet.

Le sous-module 24 communique le délai $\Delta t$ calculé à un sous-module 25 qui accède à la position et à la vitesse capturées dans la sous-liste d'attributs correspondant à l'objet $O_k$ répertorié dans la liste d'objets détectés Lci de façon à calculer la position synchronisée de l'objet $O_k$ par les formules suivantes :

$$xs := x + Vx \cdot \Delta t$$

$$ys := y + Vy \cdot \Delta t$$

Dans la sous-liste d'attributs en sortie du sous-module 25, la vitesse l'objet $O_k$ peut rester quantifiée par ses coordonnées Vx, Vy dans la mesure où la vitesse de chaque objet peut être considérée constante au cours du délai $\Delta t$. Les données produites par le module 20 sont alors synchrones pour tous les capteurs.

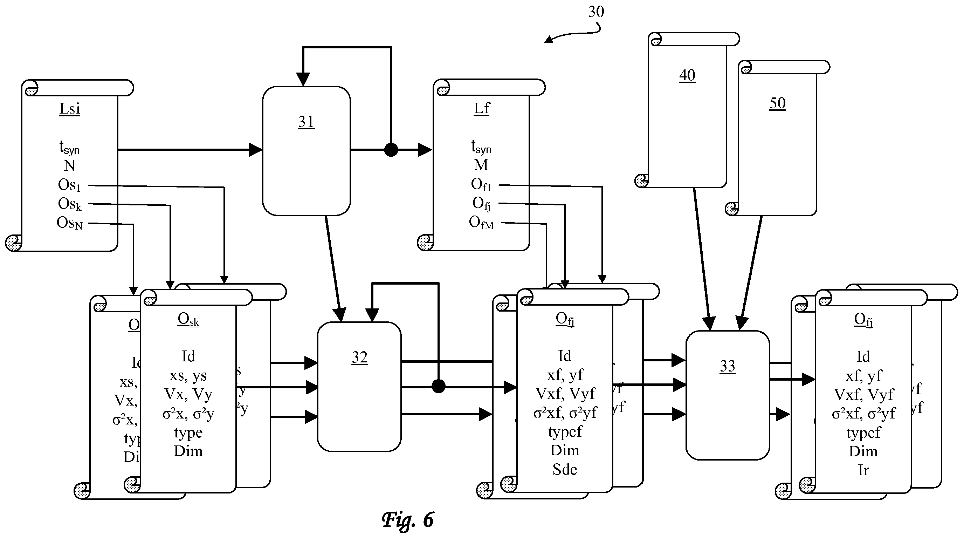

Chaque liste Lsi répertoriant des données synchronisées produites par le module 20, à titre simplement illustratif les listes Ls1, Ls2, Ls3, Ls4 de la figure 4, sont transmises à un module 30 de fusion expliqué maintenant de manière plus détaillée en référence à la figure **6** pour obtenir une photo instantanée de l'environnement du véhicule 12.

Le module 30 de fusion a pour but de renforcer la confiance dans les informations fournies en exploitant la redondance des informations ajoutée par l'utilisation de plusieurs capteurs.

Un sous-module 31 du module 30 scrute successivement chaque liste Lsi transmise au module 30 pour produire des données fusionnées, structurées dans l'exemple de réalisation illustré par la figure **6,** au moyen d'une liste Lf fusionnée qui répertorie la totalité des objets répertoriés dans les différentes listes Lsi des différents capteurs d'indice i égal à 1, 2 et au-delà.

Ainsi le nombre M d'objets $O_{fj}$, j variant de 1 à M, répertoriés dans la liste Lf est généralement appelé à être supérieur à chaque nombre N d'objets $O_{sk}$, k variant de 1 à N, répertoriés dans chaque liste d'objets synchronisés Lsi associée à chaque capteur.

Les données fusionnées sont initialisées aux premières données synchronisées qui sont scrutées par le module 30, par exemple celles produites à partir du premier capteur 1. Dans l'exemple illustré par la figure **6,** la liste Lf reproduit initialement la liste Ls1 en pointant sur des sous-listes d'attributs qui reproduisent chacune une sous-liste d'attributs pointée par la liste Ls1. Il est intéressant d'ajouter dans chaque sous-liste d'attributs qui est pointée par la liste Lf, un attribut supplémentaire nommé Sde pour quantifier un score de détection de l'objet $O_k$ associé à la sous-liste d'attributs considérée. Le score de détection est initialisé à l'unité.

Pour chaque liste synchronisée Lsi reçue, le sous-module 31 combine la liste synchronisé Lsi à la liste fusionnée Lf par exemple de la manière suivante, jusqu'à atteindre la dernière liste synchronisée correspondant au dernier capteur.

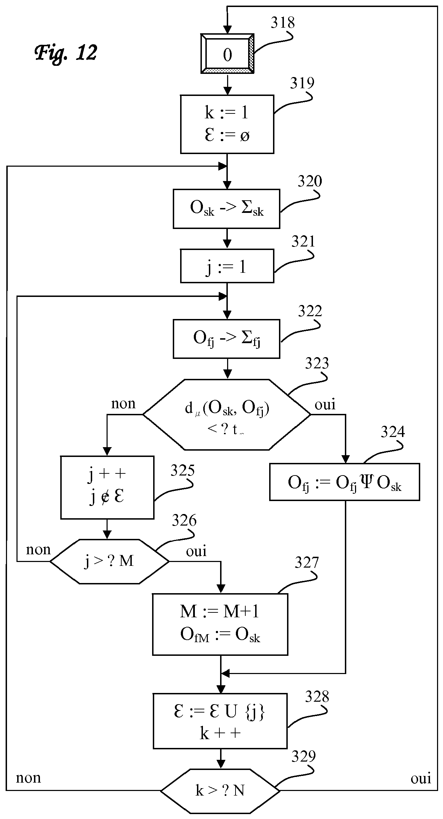

Un sous-module 32 du module 30 est programmé pour exécuter des étapes de procédé comprenant celles à présent expliquées en référence à la figure 12. Le sous-module 31 communique les données de la liste synchronisée Lsi au sous-module 32 initialement dans une étape 318 de veille en attente des données communiquées par le sous-module 31.

Dans une étape 319, le sous-module 32 commence par se placer sur la première sous-liste associée à l'objet $O_{sk}$ d'indice k = 1 dans la liste Lsi.

Dans une étape 320, le sous-module 32 accède à une matrice de covariance $\Sigma_{sk}$ liée à l'objet $O_{sk}$ d'indice k

courant sur lequel il est placé.

Considérant les valeurs xs, ys d'abscisse et d'ordonnée obtenues à partir du capteur comme des réalisations de variables aléatoires Xs, Ys pour quantifier une position de l'objet $O_{sk}$ par rapport au véhicule 12 à l'instant $t_{syn}$ de synchronisation, on rappelle que la dispersion des réalisations possibles est mesurable au moyen des variances $var_k(Xs)$, $var_k(Ys)$ de chaque variable aléatoire et des covariances $cov_k(Xs, Ys)$, $cov_k(Ys, Xs)$ entre les variables aléatoire, à partir desquelles la matrice de covariance $\Sigma_{sk}$ est définie par la formule F1 suivante :

$$\Sigma_{sk} = \begin{pmatrix} \mathrm{var}_k(Xs) & \mathrm{cov}_k(Xs, Ys) \\ \mathrm{cov}_k(Ys, Xs) & \mathrm{var}_k(Ys) \end{pmatrix}$$

Considérant les variables aléatoires Xs, Ys indépendantes, on rappelle que la matrice de covariance $\Sigma_{sk}$ peut

$$\Sigma_{sk} = \begin{pmatrix} \sigma_{xs}^2 & 0 \\ 0 & \sigma_{ys}^2 \end{pmatrix}$$

aussi s'écrire sous la forme F2 suivante : où $\sigma_{xs}$ et $\sigma_{ys}$ désignent respectivement l'écart type de la variable aléatoire Xs et l'écart type de la variable aléatoire Ys centrées chacune respectivement sur la réalisation xs, ys.

On peut aisément déterminer les écarts types ou directement leurs carrés à partir des caractéristiques techniques du capteur considéré telles qu'elles doivent être connues de son fournisseur. Lorsque leurs valeurs sont constantes, elles peuvent être stockées en mémoire du dispositif. Lorsque leurs valeurs sont variables en fonction de la visibilité, de la température ambiante ou d'autres facteurs atmosphériques décelables par le capteur, elles peuvent être transmises dans la liste Lci puis retranscrites dans la liste Lsi. On peut aussi établir de manière connue en soi une relation entre le carré de l'écart type $\sigma_{xs}^2$ respectivement $\sigma_{ys}^2$ et l'incertitude de mesure $\delta_{xs}$ respectivement $\delta_{ys}$ du capteur, par exemple pour une loi normale $\mathcal{N}$ centrée sur une incertitude nulle en moyenne : $\delta_{xs} \approx \mathcal{N}(0, \sigma_{xs}^2)$ respectivement $\delta_{ys} \approx \mathcal{N}(0, \sigma_{ys}^2)$

Dans une étape 321, le sous-module 32 commence par se placer sur la première sous-liste associée à l'objet $O_{fj}$ d'indice j = 1 dans la liste Lf.

Dans une étape 322, le sous-module 32 accède à une matrice de covariance $\Sigma_{fj}$ liée à l'objet $O_{fj}$ d'indice j courant sur lequel il est placé.

La matrice de covariance $\Sigma_{fj}$ est définie comme ci-dessus pour les valeurs xf, yf d'abscisse et d'ordonnée pour quantifier une position représentative d'objet $O_{fj}$ par rapport au véhicule 12 à l'instant $t_{syn}$ de synchronisation. La matrice

$$\Sigma_{fj} = \begin{pmatrix} \sigma_{xf}^2 & 0 \\ 0 & \sigma_{yf}^2 \end{pmatrix}$$

de covariance $\Sigma_{fj}$ peut alors ici s'écrire sous la forme F3 suivante : où $\sigma_{xf}$ et $\sigma_{yf}$ désignent respectivement l'écart type de la variable aléatoire Xf et l'écart type de la variable aléatoire Yf centrées chacune respectivement sur la réalisation xf, yf.

Dans une étape 323, le sous-module 32 vérifie si un ou plusieurs critères de fusion sont satisfaits. Un critère remarquable est celui selon lequel une distance de Mahalanobis $d_\mu(O_{sk}, O_{fj})$ entre les objets $O_{sk}$ et $O_{fj}$ est inférieure à un seuil $t_\eta$ de hachage. Dans le mode de réalisation ici présenté, la distance de Mahalanobis est calculée à partir des valeurs xs, xf, ys, yf d'abscisse et d'ordonnée des objets $O_{sk}$ et $O_{fj}$ au moyen de la formule F4 suivante :

$$d_\mu(O_{sk}, O_{fj}) = \sqrt{\begin{pmatrix} xs - xf \\ ys - yf \end{pmatrix}^T \begin{pmatrix} \sigma_{xs}^2 + \sigma_{xf}^2 & 0 \\ 0 & \sigma_{ys}^2 + \sigma_{yf}^2 \end{pmatrix}^{-1} \begin{pmatrix} xs - xf \\ ys - yf \end{pmatrix}}$$

Si le ou les critères de fusion sont satisfaits, notamment si la distance de Mahalanobis est inférieure au seuil de hachage, le sous-module 32 exécute une étape 324 qui consiste à modifier l'objet $O_{fj}$ en fusionnant $\Psi$ l'objet $O_{sk}$ avec l'objet $O_{fj}$ de façon à obtenir de nouvelles valeurs d'attributs calculées de la manière suivante, notamment en appliquant la règle de Bayes aux coordonnées de position :

$$xf = \Psi_1(xf) = \frac{xf \cdot \sigma_{xs}^2 + xs \cdot \sigma_{xf}^2}{\sigma_{xs}^2 + \sigma_{xf}^2}$$

$$yf = \Psi_2(yf) = \frac{yf \cdot \sigma_{ys}^2 + ys \cdot \sigma_{yf}^2}{\sigma_{ys}^2 + \sigma_{yf}^2}$$

$$\sigma_{xf}^2 = \Psi_3(\sigma_{xf}^2) = \frac{\sigma_{xf}^2 \cdot \sigma_{xs}^2}{\sigma_{xs}^2 + \sigma_{xf}^2}$$

$$\sigma_{yf}^2 = \Psi_4(\sigma_{yf}^2) = \frac{\sigma_{yf}^2 \cdot \sigma_{ys}^2}{\sigma_{ys}^2 + \sigma_{yf}^2}$$

Les autres attributs de l'objet fusionné $O_{fj}$ modifié peuvent être requalifiés en leur appliquant aussi la règle de Bayes avec les écarts types qui conviennent ou d'autre manière.

Par exemple, si on veut appliquer la règle de Bayes aux coordonnées de vitesse, il est nécessaire au sous-module 32 de pouvoir accéder aux écarts types des coordonnées synchronisées de vitesse. On peut aussi requalifier les coordonnées de vitesse Vxf, Vyf de l'objet fusionné $O_{fj}$ en faisant une simple moyenne arithmétique des coordonnées de vitesse Vxs, Vys de l'objet synchronisé $O_{sk}$ et des coordonnées de vitesse Vxf, Vyf de l'objet fusionné $O_{fj}$. Il en est de même par exemple encore pour les dimensions spatiales Dim de l'objet.

Certains attributs se prêtent plus difficilement aux calculs de moyenne comme par exemple l'attribut type. Pour des cas où le type serait différent entre des objets détectés éligibles à la fusion, divers solutions peuvent être envisagées comme celle de retenir le type en provenance du capteur le plus fiable en la matière, celle de cumuler les types, celle de procéder par vote en cas de provenance de plusieurs capteurs ou encore celle de considérer l'égalité de type comme critère de fusion à satisfaire.

Si dans l'étape 323 le ou l'un des critères de fusion n'est pas satisfait, notamment si la distance de Mahalanobis est supérieure ou égale au seuil de hachage, le sous-module 32 exécute une étape 325 qui consiste à augmenter l'indice j pour se placer sur la sous-liste suivante associée à l'objet $O_{fj}$ dans la liste Lf jusqu'à atteindre la dernière sous-liste d'indice j=M, contrôlé dans une étape 326. L'étape 326 reboucle sur l'étape 322 tant que j n'est pas supérieur ou égal à M pour vérifier si un ou plusieurs critères de fusion sont satisfaits pour fusionner l'objet synchronisé $O_{sk}$ d'indice k courant à l'un des objets fusionnés de la liste Lf.

Une valeur de l'indice j supérieure à M indique qu'il est impossible de modifier l'un des objets $O_{fj}$ en fusionnant l'objet $O_{sk}$ avec lui. Ainsi une réponse positive au test d'étape 326 active une étape 327 qui consiste à augmenter d'une unité le nombre M d'objets de la liste Lf de façon à y ajouter un objet fusionné $O_{fj}$ d'indice j=M qui reproduit l'objet synchronisé $O_{sk}$ courant.

A la suite de l'étape 324 dans laquelle l'objet synchronisé $O_{sk}$ courant a été fusionné avec l'un des objets fusionnés $O_{fj}$ préexistants dans la liste Lf ou alternativement à la suite de l'étape 327 dans laquelle l'objet synchronisé $O_{sk}$ courant a été ajouté dans la liste Lf de façon à générer un nouvel objet fusionnés $O_{fM}$, une étape 328 consiste à augmenter l'indice k de façon à placer le sous-module 32 sur la sous-liste associés à l'objet $O_{sk}$ d'indice k suivant dans la liste Lsi en rebouclant sur l'étape 320 tant que l'indice k ne dépasse pas le nombre N d'objets synchronisés reçus dans la liste Lsi.

Dans l'étape 329 qui consiste à tester l'existence de ce dépassement, le sous-module 32 reboucle sur l'étape d'attente 318 en cas de réponse positive au test, de façon à redonner la main au module 31 pour aborder la liste Lsi suivante jusqu'à la dernière de celles produites à partir des capteurs.

De façon à ne pas fusionner un même objet $O_{fj}$ de la liste Lf avec deux objets $O_{sk}$ distincts de la liste Lsi, on peut prévoir un ensemble $\varepsilon$ initialisé à l'ensemble vide $\emptyset$ dans l'étape 319, destiné à répertorier chaque indice j d'objet $O_{fj}$ de la liste Lf ayant déjà été modifié ou créer à partir d'un objet $O_{sk}$ précédent de la liste Lsi. L'ensemble $\varepsilon$ est alors nourri de l'indice j scruté dans l'étape 324 ou dans l'étape 327 lors du passage du sous module 32 par l'étape 328, de façon à prendre en étape 325 un indice j suivant hors de l'ensemble $\varepsilon$.

Ainsi, le sous-module 31 fournit en sortie une liste Lf complète d'objets fusionnés avec leurs attributs sous forme de données fusionnées à un sous-module 33 d'évaluation de risque.

Le sous-module 33 accède à une structure de données cartographiques 40 pour construire des indicateurs de risque en relation avec chacun des objets Ofj en combinaison avec des données contextuelles accessibles à partir d'une structure de données 50. Le sous-module 33 met en œuvre des procédés connus par ailleurs pour localiser précisément le véhicule 12 en utilisant un récepteur GNSS, des cartes de navigation numériques accessibles dans la structure de données 40 et des algorithmes d'extraction de primitives géométriques par vision comme par exemple ceux divulgués dans la publication scientifique « Tao, Z. and Bonnifait, P. and Fremont, V. and Ibanez-Guzman, J., Lane marking aided vehicle localization, IEEE Conférence on Intelligent Transportation Systems (IEEE ITSC2013), October 6-9, The Hague, The Netherlands, 2013 ».

Le traitement numérique des cartes de navigation extraites de la structure de données 40 permet au sous-module 33 de restituer avec précision la position du véhicule dans son environnement géographique de façon à y localiser différents objets résidents sources d'interactions avec le véhicule 12 et avec les autres objets mobiles. Le sous-module 33 combine la configuration de la scène routière ainsi constituée avec le contexte de façon à définir un niveau de risque associé à chaque objet dans le but de fournir à la navigation des ordres de haut niveau. Dans le cas d'une évolution du véhicule notamment en milieu urbain, l'utilisation des données cartographiques permet d'enrichir la description sémantique de l'environnement en évaluant une notion de risque liée aux obstacles en relation avec la topologie, la structure et la signalétique de la scène dans laquelle évolue le véhicule. Les marquages au sol, les intersections, les panneaux, et autres spécificités de la voirie, sont utilisés pour améliorer l'indicateur de risque lié à chaque objet détecté dans la scène. Par exemple, un véhicule venant de face en ligne droite mais restant sur sa voie est potentiellement moins dangereux qu'un véhicule arrivant sur la gauche à une intersection.

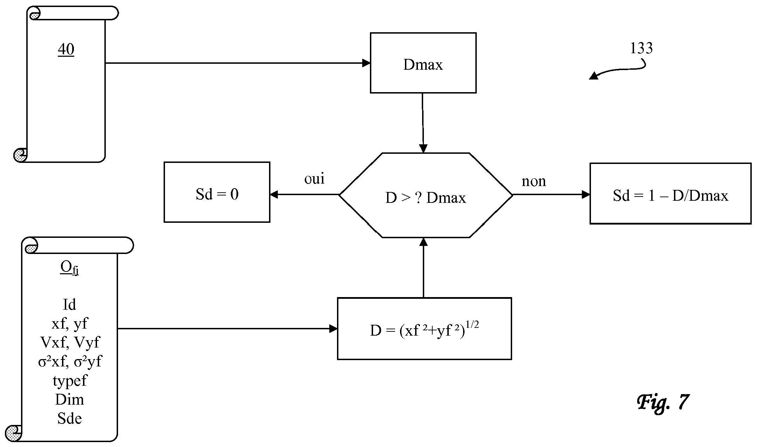

Le sous-module 33 d'évaluation de risque génère l'indicateur de risque associé à chaque objet $O_{fj}$ par combinaison de différents scores élaborés chacun par un bloc 133, 233, 333, 433 sur le modèle de ceux illustrés par les figures 7 à 10.

Les 7 et 8 présentent une élaboration de scores basés sur la position cartésienne et la position angulaire de l'obstacle ainsi que sur les données cartographiques de nature essentiellement contextuelle. Par exemple, plus l'objet est proche et plus il rentre sur la voie du véhicule 12, plus il est dangereux. A l'entrée d'un carrefour, les données de distance et d'angle sont importantes pour quantifier la dangerosité de l'objet détecté, venant de gauche ou de droite par exemple.

En référence à la figure 7, le bloc 133 calcule une distance D qui sépare l'objet $O_{fj}$ et le véhicule 12. La distance D est par exemple calculée de façon usuelle à partir des coordonnées xf, yf de l'objet dans le repère relatif au véhicule 12. Le bloc 133 compare ensuite la distance D calculée à une distance maximale Dmax obtenue à partir de la structure de données 40.

Un score de distance Sd est établi à zéro lorsque la distance D est supérieure à la distance maximale Dmax. Le score de distance Sd est établi à sa valeur maximale, par exemple l'unité, lorsque la distance D est nulle. Pour d'autres valeurs de la distance D, le bloc 133 calcule un score compris entre zéro et l'unité, par exemple en retranchant de l'unité la proportion de la distance maximale représentée par la distance D.

La distance maximale Dmax est la distance au-delà de laquelle il n'y a pas lieu de prendre en compte de facteur de risque lié au score Sd de distance lié à l'objet détecté. La valeur de la distance maximale peut être prise égale à la portée du capteur, à la course de freinage possible du véhicule 12 ou à d'autres valeurs liés à une stratégie d'évaluation du risque prédéfinie.

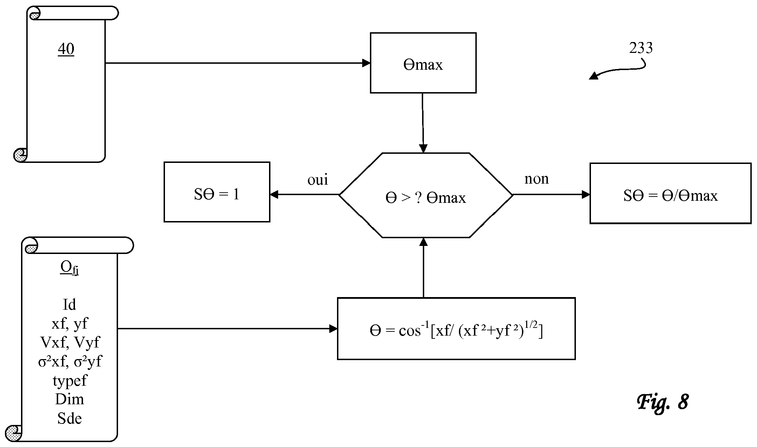

En référence à la figure 8, le bloc 233 calcule un angle θ qui sépare un axe de visée de l'objet $O_{fj}$ et l'axe longitudinal du véhicule 12. L'angle θ est par exemple calculé de façon usuelle à partir des règles de trigonométrie classiques appliquées aux coordonnées xf, yf de l'objet dans le repère relatif au véhicule 12. Le bloc 233 compare ensuite l'angle θ calculé à un angle θmax maximal obtenu à partir de la structure de données 40.

Un score d'angle Sθ est établi à zéro lorsque l'angle θ est nul. Le score d'angle Sθ est établi à sa valeur maximale, par exemple l'unité, lorsque l'angle θ est supérieur à l'angle maximal θmax. Pour d'autres valeurs de l'angle θ, le bloc 233 calcule un score compris entre zéro et l'unité, par exemple égal à la proportion de l'angle maximal θmax représentée par l'angle θ.

L'angle maximal θmax est l'angle au-delà duquel le facteur de risque lié au score Sθ d'angle de visée de l'objet détecté, est considérablement élevé. La valeur de l'angle maximal peut être prise égale à la portée angulaire du capteur, à la capacité de braquage du véhicule 12 ou à d'autres valeurs liés à une stratégie d'évaluation du risque prédéfinie.

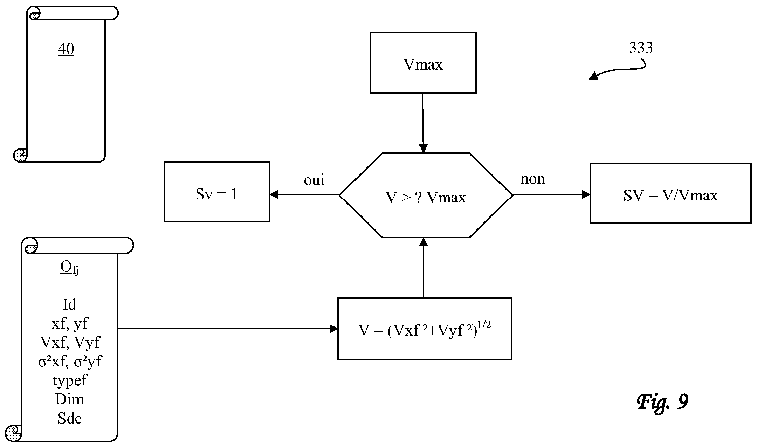

En référence à la figure 9, le bloc 333 calcule une vitesse V à laquelle évolue l'objet $O_{fj}$ par rapport au véhicule 12. La distance V est par exemple calculée de façon usuelle à partir des coordonnées de vitesse Vxf, Vyf de l'objet dans le repère relatif au véhicule 12. Le bloc 333 compare ensuite la vitesse V calculée à une vitesse maximale Vmax obtenue ou non à partir de la structure de données 40.

Un score de vitesse Sv est établi à l'unité lorsque la vitesse V est supérieure à la vitesse maximale Vmax. Le score de vitesse Sv est établi à sa valeur minimale, par exemple zéro, lorsque la vitesse V est nulle. Pour d'autres valeurs de la vitesse V, le bloc 333 calcule un score compris entre zéro et l'unité, par exemple en proportion de la vitesse maximale représentée par la vitesse V.

La vitesse maximale Vmax est la vitesse au-delà de laquelle le facteur de risque lié au score Sv de vitesse à laquelle se déplace l'objet détecté est considérablement élevé. La valeur de la vitesse maximale peut être prise variable en fonction de son orientation vers le véhicule, à la course de freinage possible du véhicule 12 ou à d'autres valeurs liées à une stratégie d'évaluation du risque prédéfinie.

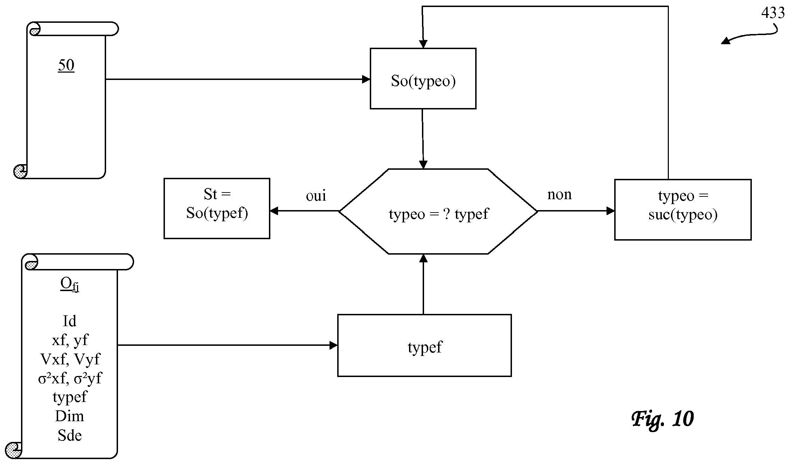

Le bloc 433 dont le fonctionnement est illustré par la figure 10, a pour but d'élaborer un score basé sur le type d'obstacle pour attribuer un score de vulnérabilité en fonction du type d'obstacle rencontré : un piéton est par exemple plus vulnérable qu'une voiture, il faut donc lui donner plus d'importance dans l'évaluation du risque.

Le bloc 433 extrait le type d'obstacle typef de la sous-liste associée à l'objet $O_{fj}$. Le bloc 433 parcourt ensuite une table associative 50 de scores de vulnérabilité attribués chacun à un type d'obstacle jusqu'à retrouver le type d'obstacle correspondant au type de l'objet courant.

Un score de type St est établi à la valeur So(typeo) associée dans la table 50 au type typeo égal au type typeF de l'objet traité.

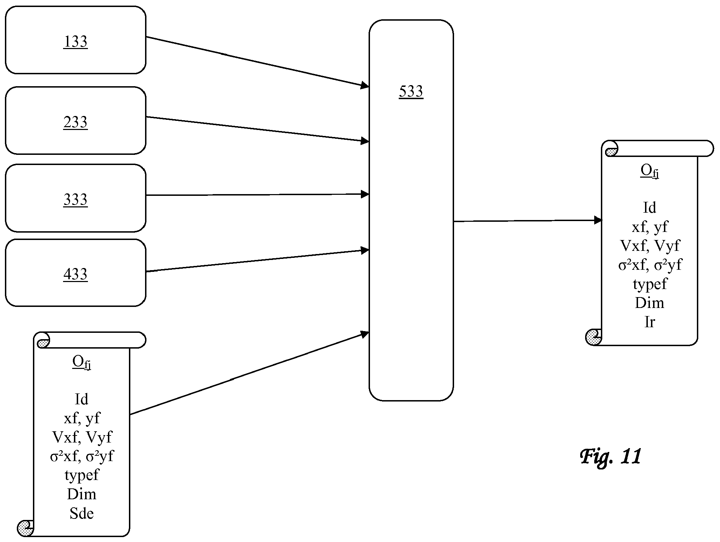

Un bloc 533 permet au module 30 de fusion de produire une liste Lfe d'objets $O_{fj}$ comme expliqué à présent en référence à la figure 11.

Le bloc 533 applique aux scores élaborés par les blocs 133, 233, 333, 433, une règle de combinaison qui dépend de l'utilisation prévue et qui peut par exemple être une moyenne pondérée en fonction des besoins de la navigation. D'autres formalismes d'aide à la décision tels que la logique floue ou les fonctions de croyance peuvent être utilisés pour définir la règle de combinaison à utiliser. Le résultat de la combinaison donne un indicateur de risque Ir que le bloc 533 ajoute dans la sous liste de l'objet Ofj sur lequel pointe alors la liste Lfe.

## Revendications

**1.** Dispositif de signalisation en temps réel d'au moins un objet (13, 14, 15) à un module (60) de navigation de véhicule (12) comprenant un premier capteur (1) agencé pour produire des données de premier capteur comportant une première position et une première vitesse capturées d'objet par rapport au véhicule, comprenant :

- au moins un deuxième capteur (2, 3) agencé pour produire des données de deuxième capteur comportant une deuxième position et une deuxième vitesse capturées d'objet par rapport au véhicule (12) ;
- un module (20) de synchronisation agencé pour produire des données synchronisées comportant une première position synchronisée à partir de la première position et de la première vitesse capturées et au moins une deuxième position synchronisée à partir de la deuxième position et de la deuxième vitesse capturées ;
- un module (30) de fusion agencé pour produire des données fusionnées comportant une position fusionnée à partir de la première position synchronisée et de la deuxième position synchronisée de façon à signaler ledit au moins un objet (13, 14, 15) au module (60) de navigation en lui communiquant tout ou partie des données fusionnées,

**caractérisé en ce qu'**il comprend :

- un module d'évaluation de risque agencé pour compléter les données fusionnées par un indicateur de risque associé à chaque objet (13, 14, 15) signalé et généré à partir des données fusionnées,
- un ensemble de blocs (133, 233, 333, 433) de calcul de score à partir d'une ou plusieurs données fusionnées et un bloc (533) de combinaison de scores calculés par tout ou partie de l'ensemble de blocs de calcul de score de façon à générer l'indicateur de risque de chaque objet par combinaison de scores, ledit ensemble comprenant un bloc (133) de calcul de score de distance séparant l'objet et le véhicule, un bloc (233) de calcul de score d'angle séparant un axe de visée de l'objet et un axe longitudinal du véhicule, un bloc (333) de calcul de score de vitesse d'évolution de l'objet par rapport au véhicule et un bloc (433) de calcul de score de type d'objet pour attribuer un score de vulnérabilité en fonction du type d'objet, le bloc (533) de combinaison de scores appliquant aux scores élaborés par le bloc (133) de calcul de score de distance, le bloc (233) de calcul de score d'angle, le bloc (333) de calcul de score de vitesse et le bloc (433) de calcul de score de type d'objet, une règle de combinaison qui dépend de l'utilisation prévue.

**2.** Dispositif selon la revendication 1 , **caractérisé en ce que** ledit ensemble comprend au moins un bloc (133) de calcul de score à partir en outre de données cartographiques.

**3.** Dispositif selon l'une des revendications 1 à 2, **caractérisé en ce que** ledit bloc (533) de combinaison est agencé pour combiner les scores par sommation pondérée de tout ou partie des scores calculés.

4. Dispositif selon l'une des revendications précédentes, **caractérisé en ce que** ledit module (30) de fusion est agencé pour fusionner au moins une position supplémentaire synchronisée à ladite position fusionnée à partir de la première position synchronisée et de la deuxième position synchronisée.

5. Dispositif selon l'une des revendications précédentes, **caractérisé en ce que** les données synchronisées accédées par que ledit module (30) de fusion, comportent en outre une variance de position associée à chaque position synchronisée de façon à effectuer une sommation des positions synchronisées, pondérée par les variances associées pour fusionner les positions synchronisées.

6. Dispositif selon l'une des revendications précédentes, **caractérisé en ce que** :

   - les données synchronisées produites par le module (20) de synchronisation, comportent en outre une variance de position associée à chaque position synchronisée ;
   - le module (30) de fusion est agencé pour produire des données fusionnées comportant une position fusionnée à partir de la première position synchronisée et de la deuxième position synchronisée de façon à signaler un même objet au module (60) de navigation en lui communiquant lesdites données fusionnées lorsqu'une distance de Mahalanobis entre lesdites positions synchronisées est inférieure à un seuil prédéterminé et pour ne pas produire de données fusionnées comportant une position fusionnée à partir de la première position synchronisée et de la deuxième position synchronisée de façon à signaler deux objets différents au module (60) de navigation lorsque ladite distance de Mahalanobis est supérieure au seuil prédéterminé.

7. Véhicule (12) automobile **caractérisé en ce qu'**il comporte un dispositif selon l'une des revendications 1 à 6.

**Patentansprüche**

1. Vorrichtung zur Signalisierung wenigstens eines Objekts (13, 14, 15) in Echtzeit an ein Navigationsmodul (60) eines Fahrzeugs (12), welche einen ersten Sensor (1) umfasst, der dafür ausgelegt ist, Daten des ersten Sensors zu erzeugen, die eine erste Position und eine erste Geschwindigkeit eines Objekts in Bezug auf das Fahrzeug, die erfasst wurden, beinhalten, und welche umfasst:

   - wenigstens einen zweiten Sensor (2, 3), der dafür ausgelegt ist, Daten des zweiten Sensors zu erzeugen, die eine zweite Position und eine zweite Geschwindigkeit eines Objekts in Bezug auf das Fahrzeug (12), die erfasst wurden, beinhalten;
   - ein Synchronisationsmodul (20), das dafür ausgelegt ist, synchronisierte Daten zu erzeugen, welche eine erste Position, die ausgehend von der erfassten ersten Position und ersten Geschwindigkeit synchronisiert wurde, und wenigstens zweite Position, die ausgehend von der erfassten zweiten Position und zweiten Geschwindigkeit synchronisiert wurde, beinhalten;
   - ein Zusammenführungsmodul (30), das dafür ausgelegt ist, zusammengeführte Daten zu erzeugen, die eine ausgehend von der synchronisierten ersten Position und der synchronisierten zweiten Position zusammengeführte Position beinhalten, um das wenigstens eine Objekt (13, 14, 15) dem Navigationsmodul (60) zu signalisieren, indem es alle oder einen Teil der zusammengeführten Daten an dieses übermittelt,

   **dadurch gekennzeichnet, dass** sie umfasst:

   - ein Risikobewertungsmodul, das dafür ausgelegt ist, die zusammengeführten Daten durch einen Risikoindikator zu vervollständigen, der jedem signalisierten Objekt (13, 14, 15) zugeordnet ist und aus den zusammengeführten Daten erzeugt wird,
   - einen Satz von Blöcken (133, 233, 333, 433) zur Berechnung von Scores aus einem oder mehreren zusammengeführten Datenelementen und einen Block (533) zur Kombination von Scores, die durch alle Blöcke oder einen Teil der Blöcke des Satzes von Blöcken zur Berechnung von Scores berechnet wurden, um den Risikoindikator jedes Objekts durch Kombination von Scores zu erzeugen, wobei der Satz einen Block (133) zur Berechnung eines Scores für den Abstand, der das Objekt und das Fahrzeug trennt, einen Block (233) zur Berechnung eines Scores für den Winkel, der eine Visierachse des Objekts und eine Längsachse des Fahrzeugs trennt, einen Block (333) zur Berechnung eines Scores für die Veränderungsgeschwindigkeit des Objekts in Bezug auf das Fahrzeug und einen Block (433) zur Berechnung eines Scores für den Objekttyp, um in Abhängigkeit vom Objekttyp einen Vulnerabilitätsscore zuzuweisen, umfasst, wobei der Block (533) zur Kombination von Scores auf die Scores, die von dem Block (133) zur Berechnung eines Scores für den Abstand, dem Block (233) zur Berechnung eines Scores für den Winkel, dem Block (333) zur Berechnung eines Scores für die Geschwindigkeit und dem Block (433) zur Berechnung eines Scores für den Objekttyp bestimmt wurden, eine Kombinationsregel anwendet, welche von der vorgesehenen Verwendung abhängt.

2. Vorrichtung nach Anspruch 1, **dadurch gekennzeichnet, dass** der Satz wenigstens einen Block (133) zur Berechnung eines Scores außerdem aus kartographischen Daten umfasst.

3. Vorrichtung nach einem der Ansprüche 1 bis 2, **dadurch gekennzeichnet, dass** der Block (533) zur Kombination dafür ausgelegt ist, die Scores durch gewichtete Addition aller oder eines Teils der berechneten Scores zu kombinieren.

4. Vorrichtung nach einem der vorhergehenden Ansprüche, **dadurch gekennzeichnet, dass** das Zusammenführungsmodul (30) dafür ausgelegt ist, wenigstens eine synchronisierte zusätzliche Position mit der ausgehend von der synchronisierten ersten Position und der synchronisierten zweiten Position zusammengeführten Position zusammenzuführen.

5. Vorrichtung nach einem der vorhergehenden Ansprüche, **dadurch gekennzeichnet, dass** die synchronisierten Daten, auf die das Zusammenführungsmodul (30) zugreift, außerdem für jede synchronisierte Position eine zugeordnete Positionsvarianz beinhalten, um eine Addition der synchronisierten Positionen durchzuführen, die mit den zugeordneten Varianzen gewichtet ist, um die synchronisierten Positionen zusammenzuführen.

6. Vorrichtung nach einem der vorhergehenden Ansprüche, **dadurch gekennzeichnet, dass**:

- die synchronisierten Daten, die von dem Synchronisationsmodul (20) erzeugt werden, außerdem für jede synchronisierte Position eine zugeordnete Positionsvarianz beinhalten;
- das Zusammenführungsmodul (30) dafür ausgelegt ist, zusammengeführte Daten zu erzeugen, die eine ausgehend von der synchronisierten ersten Position und der synchronisierten zweiten Position zusammengeführte Position beinhalten, um dem Navigationsmodul (60) ein und dasselbe Objekt zu signalisieren, indem es die zusammengeführten Daten an dieses übermittelt, wenn ein Mahalanobis-Abstand zwischen den synchronisierten Positionen kleiner als ein vorbestimmter Schwellenwert ist, und keine zusammengeführten Daten zu erzeugen, die eine ausgehend von der synchronisierten ersten Position und der synchronisierten zweiten Position zusammengeführte Position beinhalten, um dem Navigationsmodul (60) zwei verschiedene Objekte zu signalisieren, wenn der Mahalanobis-Abstand größer als der vorbestimmte Schwellenwert ist.

7. Kraftfahrzeug (12), **dadurch gekennzeichnet, dass** es eine Vorrichtung nach einem der Ansprüche 1 bis 6 aufweist.

**Claims**

1. Device for real-time signalling of at least one object (13, 14, 15) to a navigation module (60) of a vehicle (12) comprising a first sensor (1) arranged to produce first-sensor data comprising a first captured position and first captured speed of the object relative to the vehicle, comprising:

- at least one second sensor (2, 3) arranged to produce second-sensor data comprising a second captured position and second captured speed of the object relative to the vehicle (12);
- a synchronization module (20) arranged to produce synchronized data comprising a first synchronized position from the first captured position and first captured speed and at least one second synchronized position from the second captured position and second captured speed;
- a merging module (30) arranged to produce merged data comprising a merged position from the first synchronized position and the second synchronized position in such a way as to signal said at least one object (13, 14, 15) to the navigation module (60) by communicating all or some of the merged data thereto, **characterized in that** it comprises:
- a risk evaluation module arranged to complete the merged data with a risk indicator associated with each signalled object (13, 14, 15) and generated from the merged data,
- a set of blocks (133, 233, 333, 433) for computing a score from one or more merged data and a block (533) for combining scores computed by some or all of the set of score computation blocks so as to generate the risk indicator of each object by combining scores, said set comprising a block (133) for computing a score as regards the distance separating the object and the vehicle, a block (233) for computing a score as regards the angle separating an axis of sight of the object and a longitudinal axis of the vehicle, a block (333) for computing a score as regards the speed of movement of the object with respect to the vehicle and a block (433) for computing a score as regards object type, with a view to attributing a vulnerability score depending on the type of object, the block (533) for combining scores applying, to the scores generated by the block (133) for computing distance score, the block (233) for computing angle score, the block (333) for computing speed score and the block (433) for computing object-type score, a combination rule that depends on the intended use.

2. Device according to Claim 1, **characterized in that** said set comprises at least one block (133) for additionally computing a score from cartographic data.

3. Device according to one of Claims 1 to 2, **characterized in that** said combination block (533) is arranged to combine the scores by weighted summation of some or all of the computed scores.

4. Device according to one of the preceding claims, **characterized in that** said merging module (30) is arranged to merge at least one supplementary synchronized position with said merged position produced from the first synchronized position and the second synchronized position.

5. Device according to one of the preceding claims, **characterized in that** the synchronized data accessed by said merging module (30) further comprise a position variance associated with each synchronized position so as to effect a summation of the synchronized positions that is weighted by the associated variances to merge the synchronized positions.

6. Device according to one of the preceding claims, **characterized in that**:

   - the synchronized data produced by the synchronization module (20) further comprise a position variance associated with each synchronized position;
   - the merging module (30) is arranged to produce merged data comprising a merged position from the first synchronized position and the second synchronized position so as to signal a given object to the navigation module (60) by communicating said merged data thereto when a Mahalanobis distance between said synchronized positions is below a predetermined threshold and not to produce merged data comprising a merged position from the first synchronized position and the second synchronized position so as to signal two different objects to the navigation module (60) when said Mahalanobis distance is above the predetermined threshold.

7. Motor vehicle (12) **characterized in that** it comprises a device according to one of Claims 1 to 6.

Fig. 1

*Fig. 2*

Fig. 3

*Fig. 4*

EP 3 137 355 B1

**Lci**

$t_{sp}, t_l$
N
$O_{c1}$
$O_{ck}$
$O_{cN}$

23

24

**Lsi**

$t_{syn}$
N
$O_{s1}$
$O_{sk}$
$O_{sN}$

20

**$O_{cN}$**

Id
x, y
Vx, V
$\sigma^2 x$, $\sigma$
type
Dim

**$O_{ck}$**

Id
x, y
Vx, Vy
$\sigma^2 x$, $\sigma^2 y$
type
Dim

**$O_{c1}$**

Id
x, y
x, Vy
$^2 x$, $\sigma^2 y$
type
Dim

25

**$O_{sN}$**

Id
xs, v
Vx, V
$\sigma^2 x$, $\sigma$
type
Dim

**$O_{sk}$**

Id
xs, ys
Vx, Vy
$\sigma^2 x$, $\sigma^2 y$
type
Dim

**$O_{s1}$**

Id
xs, ys
x, Vy
$^2 x$, $\sigma^2 y$
type
Dim

*Fig. 5*

**Lsi**

$t_{syn}$
N
$Os_1$
$Os_k$
$Os_N$

**31**

**Lf**

$t_{syn}$
M
$O_{f1}$
$O_{fj}$
$O_{fM}$

**40**

**50**

**32**

**33**

30

**$O_{sk}$**

Id
xs, ys
Vx, Vy
$\sigma^2 x, \sigma^2 y$
type
Dim

**$O_{fj}$**

Id
xf, yf
Vxf, Vyf
$\sigma^2 xf, \sigma^2 yf$
typef
Dim
Sde

**$O_{fj}$**

Id
xf, yf
Vxf, Vyf
$\sigma^2 xf, \sigma^2 yf$
typef
Dim
Ir

*Fig. 6*

Fig. 7

40

Θmax

233

O_fj

Id
xf, yf
Vxf, Vyf
$\sigma^2 xf$, $\sigma^2 yf$
typef
Dim
Sde

SΘ = 1

oui

Θ > ? Θmax

non

SΘ = Θ/Θmax

$\Theta = \cos^{-1}[xf/(xf^2 + yf^2)^{1/2}]$

*Fig. 8*

Fig. 9

40

$O_{fj}$

Id
xf, yf
Vxf, Vyf
$\sigma^2 xf$, $\sigma^2 yf$
typef
Dim
Sde

Vmax

333

Sv = 1

oui

V > ? Vmax

non

SV = V/Vmax

$V = (Vxf^2 + Vyf^2)^{1/2}$

Fig. 10

133

233

333

433

533

$O_{fj}$

Id
xf, yf
Vxf, Vyf
σ²xf, σ²yf
typef
Dim
Sde

$O_{fj}$

Id
xf, yf
Vxf, Vyf
σ²xf, σ²yf
typef
Dim
Ir

*Fig. 11*

*Fig. 12*

**318**

$0$

**319**

$k := 1$
$\mathcal{E} := \emptyset$

**320**

$O_{sk} \rightarrow \Sigma_{sk}$

**321**

$j := 1$

**322**

$O_{fj} \rightarrow \Sigma_{fj}$

**323**

non $\quad d_\mu(O_{sk}, O_{fj}) < ? t_-$ \quad oui

**325**

$j++$
$j \notin \mathcal{E}$

**324**

$O_{fj} := O_{fj} \Psi O_{sk}$

**326**

non $\quad j > ? M$ \quad oui

**327**

$M := M+1$
$O_{fM} := O_{sk}$

**328**

$\mathcal{E} := \mathcal{E} \cup \{j\}$
$k++$

**329**

non $\quad k > ? N$ \quad oui

**EP 3 137 355 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0928428 B1
- WO 2004031877 A1
- WO 2014009631 A

**Littérature non-brevet citée dans la description**

- **TAO, Z. ; BONNIFAIT, P. ; FREMONT, V. ; IBAN-EZ-GUZMAN, J.** Lane marking aided vehicle localization. *IEEE Conférence on Intelligent Transportation Systems (IEEE ITSC2013),* 2013